# EUROPEAN PATENT APPLICATION

(11) **EP 1 947 414 A1**
(43) Date of publication of application: **23.07.2008**
(21) Application number: 08397501.1
(22) Date of filing: 15.01.2008
(51) Int. Cl.: F41H 5/04

(54) **Anti-ballistic protective structure**

(30) Priority: 16.01.2007 FI 20075024
(71) Applicant: Fy-Composites OY, 37150 Nokia (FI)
(72) Inventor: Siikonen, Jyrki, 35100, Orivesi (FI); Mustakangas, Mika, 33950, Pirkkala (FI)
(74) Representative: Hovi, Simo Pekka Tapani

(57) **Abstract**

The invention relates to a new integral composite structure that is either lighter than known structures on similar protection levels or provides improved protection compared to structures having same weight. The structure comprises a first load-bearing outer layer (1), a second load-bearing layer 86) and a core (2 - 5) separating the outer load-bearing layers (1, 6) from each other,. The core comprises a layer (5) of first core material and a layer (2) of deforming material forming a part of the thickness of the core layer (2 - 5) and being positioned on the side of the first load-bearing outer layer and being separated from the second load bearing layer (6) by the first core material (5) so that an integral structure wherein every layer provides for anti-ballistic and load bearing properties is formed.

## Description

The invention relates to protective structures used for protecting people and gear from ballistic projectiles and fragments on battlefield or situations where risk for armed attack is present.

The need for more efficient protection against various threats is rising especially in international conflicts where armies or peacekeeping forces are involved. The level of protection sought and needed is rising also in police forces, for example in riot control situations. Also civilians may need protected or armoured vehicles when working conditions where risk of violent conflict or attack is present. Traditionally anti-ballistic protective structures have been made using special steel, possibly in combination with ceramic or other protective materials. However, steel has some drawbacks that limit its use. The most important factor in using steel is that when the level of needed protection (ability to stop projectiles) rises, the thickness of steel needed for stopping the projectile also rapidly rises and the weight of the structure becomes a problem. This can lead to very heavy land vehicles or sea vessels. One particular problem is that doors and hatches made of steel become too heavy to handle without assisting powered actuators. Armour steel is also very difficult to shape making manufacturing of only flat surfaces possible.

Using composite structures solves some of the problems of steel structures. Composite structures usually comprise high strength fibres, like carbon, E-glass, S2-glass, aramide, polyamide, polyethylene or polypropylene, embedded into a matrix material (polyester, vinylester, epoxy, phenol or other thermosetting or thermoplastic resins). These high strength panels may be combined with deforming layers such as metal or ceramics that brake or deform the projectile so that its energy can be absorbed by fibre material. The composite can be formed to more rigid structures by using cores separating two fibre reinforced layers. Core materials may be polymers (PVC-, PMI-, PES-,foams etc.), balsa-wood, ply-wood or metal foams (aluminium, steel), honeycombs (aluminium, phenol/nomex or thermoplastic polymer) and such. Some of the main advantages of the composites are high flexibility in properties, relatively light weight and flexibility to produce products that have no restrictions relating to form. Usually the composite structures for higher protection levels include a deforming layer of ceramic material directly on the surface of the structure on the side where the projectile is supposed to hit. The load-bearing structure gives the necessary rigidity and strength for the structure. This can be made of two load-bearing surface layers separated by a core. This load-bearing structure also decelerates the projectile and absorbs energy. Finally, a stopping layer consisting of high strength fibres is arranged behind the load-bearing structure. However, taking into notion the high variability inherent to composites, it is impossible to give herein a comprehensive description of different approaches to anti-ballistic protection materials made of composites.

The main drawbacks of composite structures are very high costs in some cases and still very high weight on higher protection levels. Therefore there is need for an improved composite structure for anti-ballistic purposes.

The purpose of the invention is to provide a new integral composite structure that is either lighter than known structures on similar protection levels or provides improved protection compared to structures having same weight.

The invention is based in that protective structure comprises at least first load-bearing outer layer, a second load-bearing layer and a core separating the outer load-bearing layers from each other, the core comprising a layer of first core material and a layer of deforming material forming a part of the thickness of the core layer and being positioned on the side of the first load-bearing outer layer.

One preferred embodiment of the invention comprises an intermediate layer between the deforming material and first core material. The intermediate layer preferably comprises a sheet of high strength fibres.

The invention usually further comprises a stopping layer of high strength fibre material placed behind the second outer layer. In one preferred embodiment the stopping layer is combined with the second load-bearing layer to a single layer.

According to one embodiment of the invention the deforming layer is ceramics.

According to one feature of the invention, it may include features or layers providing any or all of: heat insulation, protection for radio frequency interference, sound proofing, radar stealth properties and fire protection.

More specifically, the invention is characterized by features presented in the independent claim 1.

Further features of the invention are described in the dependent claims.

The invention provides essential benefits.

The main advantage of the invention is that it makes it possible to obtain higher protection levels on same or lighter structural weights than with materials and structures used today. Compared to steel structures the composite provides much higher flexibility in form and design making it ideal for curved or otherwise complicated components. It can be used preferably as a load-bearing structure that has high anti-ballistic protection level so that the load-bearing capabilities of the composite can be utilised in full. However, using the structure according to the invention as an anti-ballistic protection only is possible, but this only adds to the overall weight of the structure. One very feasible use of the invention is in doors, hatches or similar structures that have to be moved by human force. These can be made light enough so that no powered actuators are needed. The integrated structure according to the invention makes it possible to combine load-bearing structure with all types of anti-ballistic protection, namely deforming the projectile, absorbing its energy and stopping the projectile and fragments thereof. The deforming layer or material is well enclosed within the structure whereby damages caused by single projectiles are limited to small areas. This is important especially when brittle deforming material like ceramics is used. The ceramics is used often as tiles and enclosing them within the composite prevents at least in some extent the fracturing of adjacent tiles when one of the tiles is hit. Also, the structure makes it possible to make curved structures also when ceramic deforming layer is used, which has not been possible earlier. Even a deforming layer made of aluminium oxide tiles can withstand bending loads when embedded into a structure according to the invention.

A more advanced weight/protection level ratio is achieved by the fact that in the structure according to the invention all of the layers of the structure influence to both structural strength and rigidity and to anti-ballistic properties. Therefore the load-bearing structures do not have to bear the weight of the protective layers and the load-bearing layers also participate in providing anti-ballistic properties.

The invention is now examined in further detail with reference to the accompanied drawing. Above presented and other objects and features of the invention will become apparent from the following detailed description considered in conjunction with the accompanying drawing. It is to be understood, however, that the drawings are intended solely for purposes of illustration and not as a definition of the limits of the invention, for which reference should be made to the appended claims.

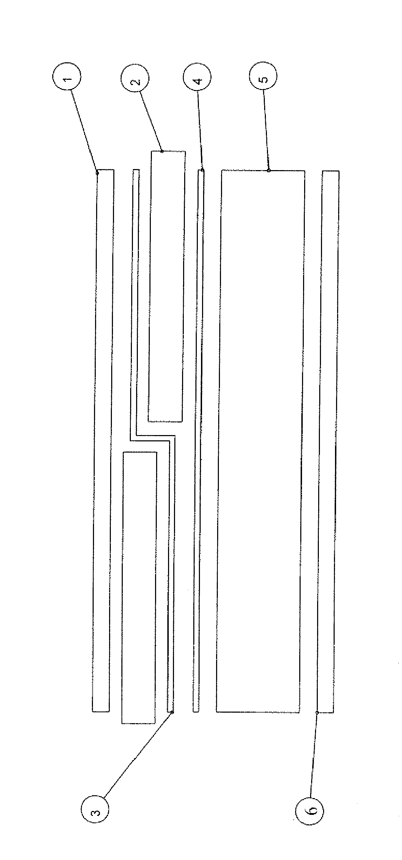

Figure 1 shows a diagrammatical view of a cross section of one embodiment of the invention.

In the figure 1 the layers of the structure are presented separated from each other for clarity. It must be understood that in a complete structure these are attached to each other by conventional means used in composite technology to form an integrated structure.

The outer layer on the incoming side of the projectiles is the first outer load-bearing layer 1. This layer 1 can be made of metal sheet of a fiber reinforced composite sheet. The main purpose of this sheet is to form a load-bearing structure. If a metal sheet is used for outer layer 1 it also causes some deformation to projectiles, depending of the material and material thickness. A fiber-reinforced composite on the other hand provides for absorbing the energy of the projectile especially when high strength fibers are used in this layer. The first outer layer 1 forms together with second load-bearing layer 6 and the core structure 2 - 5 the load-bearing skin structure. The essential feature herein is that the load-bearing layers are dimensioned so that loads, especially the tensile and compression , imposed to the structure are carried by these outer layers or skins. The core material is dimensioned to carry the required shear forces. In this aspect the structure is conventional double skin-core composite.

The core comprises adjacent to the first load-bearing layer 1 a deforming layer 2. This layer is made of hard material capable of deforming or breaking incoming projectiles. This layer 2 should be close to the first load-bearing layer 1, preferably attached thereto or separated therefrom by only a binding fabric 3. The binding fabric 3 can be a straight sheet of fabric placed on the opposite side of the deforming layer 2 in relation to the first load-bearing layer 1, or preferably, it can be folded to Z-form to separate tiles of deforming material 2 so that it is alternatively between the first load-bearing layer 1 and the tile of deforming material 2 and between the tile of deforming material 2 and the core materials on the other side. This Z-formation separates the tiles and decreases the risks of breaking of the adjacent tiles when hit by a projectile. Next, in the direction away from the first load-bearing layer 1, may be a support laminate layer 4. This layer 4 further supports the deforming layer 2 and spreads the forces on the next layer, a core material layer 5. The main function of this layer 5 is to separate the load-bearing layers 1, 6 so that a load-bearing two skin-core composite is formed. However, in this structure the core has further anti-ballistic tasks. The core absorbs first energy of the deformed projectile that has penetrated the outer layer 1 and deforming layer 2 and provides distance between these layers 1, 2 and second outer layer 6. The projectile or fragments thereof may rotate in the core material 5 whereby energy is absorbed and the projectile is turned so that a larger cross sectional area hits the second outer layer 6. Larger the cross sectional area of the projectile that hits the second load-bearing layer 6, bigger the chances of the layer 6 to catch the projectile and absorb its remaining energy. The second load-bearing layer may be dimensioned so that it catches projectiles having energy same or smaller than the protection level of the structure. The second load-bearing layer may also be divided into two separate layers, a load-bearing solid layer and a less tightly bound layer comprising fiber sheets that are designed to catch the projectiles that have penetrated the previous layers. Even in this case the catching part of the second load-bearing layer is integrated to carry loads imposed to the structure as integral part thereof.

The operation and performance of the structure under a hit is described below.

When a bullet, a grenade fragment or other high velocity projectile hits the first load bearing layer 1, this layer 1 begins to absorb the energy of the projectile and work is needed to penetrate to the deforming layer 2. The deforming layer 2 is formed of hard material that at least deforms the projectile increasing its cross sectional area and possibly breaking it into smaller pieces that naturally have smaller energy and can be stopped more easily. The deformation layer 2 is supported by the binding layer 3 and the support laminate layer 4. These decrease the fragmentation of deforming layer 2 and divide the energy directed to the deforming layer over a larger area of the core material 5. This improves both the deformation of the projectile and energy absorbance. Further, deformation of the core material is limited since the impact energy id spread over a large area. If the projectile penetrates the abovementioned layers, it must travel trough the core material 5. The resistance of the core material deflects the path of the projectile, which increases the distance traveled and turns the projectile in most cases so that it hits the next layer, the second load-bearing layer 6, in a position where it has a large area against this layer. The deflection is further enhanced by the fact that the deformation layer already deflects the projectile and its form is not optimal for direct penetration. The deformed projectile is finally catched by second load-bearing layer 6, which is reinforced with a further catching layer, if necessary.

The functions of different layers can be divided to anti-ballistic functions and structural (load bearing) functions. These are set forth below.

**Table 1**

| | Structural | Anti-ballistic |
|---|---|---|
| First load-bearing layer | Load bearing | Protects from environmental stresses Decreases fracturing of deforming |
| | | layer |
| Deforming layer | Forms part of the core (Load bearing) | Deforms projectiles Absorbs energy |
| Binding layer | Supports deforming layer | Decreases fracturing of deforming layer |
| Support laminate | Increases shear strength | Spreads energy Supports deforming layer |
| Core material | Takes shear loads | Provides travel distance Spreads energy |
| Second load-bearing layer | Load bearing | Stops projectiles/fragments |

The invention relates to a composite structure. Each of the layers of the structure may be of several different materials depending on the properties that the final product has to fulfill. Some examples of possible material alternatives are set forth below.

The first load-bearing layer may be of metal or composite. If a metal sheet is used it can be made of aluminum or steel. High strength compositions of these metals are preferable especially those developed for anti-ballistic purposes. The metal sheet may also be a composite. A fiber reinforced composite may be reinforced with directed or random fibers made of glass, carbon, E-glass, S2-glass, aramide, polyamide, polyethylene or polypropylene, boron or like. The matrix material may be polyester, vinylester, epoxy, phenol or other thermosetting or thermoplastic resin . In this layer high strength fibers naturally provide best properties.

The deforming layer may be of metal like armor steel, tungsten or metal composite. However, ceramics materials are usually preferable when properties and weight are considered. Aluminum oxide, silicon carbide and boron carbide are good examples. Metal and ceramics can also used as a composite in this layer and several suitable materials are commercially available.

The binding layer is a fabric. In this layer aramide provides good strength and flexibility. As support laminate can be used the same materials as in load bearing layers. The purpose of these layers is to separate ceramic tiles, if used, to prevent yielding of the deforming layer under impact and attach the deforming tiles, especially the ceramic tiles permanently to the structure. This layer also transfers the hit from the deforming layer to the core material.

The core material is used for absorbing the energy directed to deforming layer and for providing a distance between outer load bearing and deforming layers. High strength foams of PVC-, PMI-, PES-,foams etc.,are suitable as core materials, but core can be made of metal foam (aluminium, steel), honeycomb (aluminium, phenol/nomex or thermoplastic polymer) or even balsa wood or plywood. The most important property of this layer is ductility and toughness.

The second load bearing layer has same demands as the first load bearing layer. Since it also forms the catching layer, the properties of this layer have to be optimized so that projectiles will be stopped to this layer on desired protection level. The optimization may be done by dividing this layer into two separate layers.

The layers of the inventive structure may vary. For example, it may include layers providing any or all of: heat insulation, protection for radio frequency interference, sound proofing, radar stealth properties and fire protection. However, in minimum four layers are needed to implement the simplest embodiment of the invention: two load bearing outer layers and a core structure between the outer layers having a deforming layer and a core material layer, the deforming layer being separated from one of the outer load bearing layers by the core material layer.

The structure according to the invention can be manufactured by using conventional composite manufacturing methods, for example lamination by hand, wet lay up, vacuum infusion, RTM, high pressure molding, gluing or a combination of these or other methods.

Thus, while there have been shown and described and pointed out fundamental novel features of the invention as applied to a preferred embodiment thereof, it will be understood that various omissions and substitutions and changes in the form and details of the invention may be made by those skilled in the art without departing from the spirit of the invention. For example, it is expressly intended that all combinations of those elements, which perform substantially the same results, are within the scope of the invention. Substitutions of the elements from one described embodiment to another are also fully intended and contemplated. It is also to be understood that the drawing is not necessarily drawn to scale but is merely conceptual in nature. It is the intention, therefore, to be limited only as indicated by the scope of the claims appended hereto.

## Claims

1. Integrated anti-ballistic and load bearing structure comprising at least first load-bearing outer layer (1), a second load-bearing layer 86) and a core (2 - 5) separating the outer load-bearing layers (1, 6) from each other, **characterized in that** the core comprises a layer (5) of first core material and a layer (2) of deforming material forming a part of the thickness of the core layer (2 - 5) and being positioned on the side of the first load-bearing outer layer and being separated from the second load bearing layer (6) by the first core material (5) so that an integral structure wherein every layer provides for anti-ballistic and load bearing properties is formed.

2. Anti-ballistic protective structure according to claim 1, **characterized** of at least one intermediate layer (3, 4) between the deforming material layer (2) and first core material layer (5).

3. Anti-ballistic protective structure according to claim 1 or 2, **characterized in that** the deforming layer comprises ceramic tiles.

4. Anti-ballistic protective structure according to claim 3, **characterized in that** a binding fabric (3) is folded to Z-form to separate tiles of deforming material (2) so that it is alternatively between the first load-bearing layer (1) and the tile of deforming material (2) and between the tile of deforming material (2) and the core material (5) on the other side.

5. Anti-ballistic protective structure according to any of the claims 1-4, **characterized** of a stopping layer of high strength fibre material combined with the second outer layer (6).

6. Anti-ballistic protective structure according to any of the claims 1-5, **characterized in that** the stopping layer is combined with the second load-bearing layer to a single layer.

7. Anti-ballistic protective structure according to any of the claims 1-5, **characterized in that** the stopping layer is a separate layer of second load-bearing layer (6).

8. Anti-ballistic protective structure according to any of the claims 1-7, **characterized** of features or layers providing any or all of: heat insulation, protection for radio frequency interference, sound proofing, radar stealth properties and fire protection.
